# EUROPEAN PATENT SPECIFICATION

(11) **EP 2 215 537 B1**
(45) Date of publication and mention of the grant of the patent: **24.08.2011**
(21) Application number: 08801381.8
(22) Date of filing: 08.10.2008
(51) Int. Cl.: G05D 16/10

(54) **ADJUSTABLE PRESSURE REDUCTION VALVE**
JUSTIERBARES DRUCKREDUZIERVENTIL
SOUPAPE DE RÉDUCTION DE PRESSION AJUSTABLE

(30) Priority: 08.10.2007 DK 200701452
(43) Date of publication of application: 11.08.2010
(73) Proprietor: Müller Gas Equipment A/s, 6400 Sønderborg (DK)
(72) Inventor: TORP, Hauke, 24976 Handewitt (DE)
(74) Representative: Tellefsen, Jens J.
(86) International application number: PCT/DK2008/000347
(87) International publication number: WO 2009/046714

(56) References cited:
- WO-A-02/093284
- DE-A1- 4 418 524
- US-A1- 2006 260 690

## Description

### Field of the Invention

The present invention concerns a pressure reduction valve with a valve housing for use in connection with regulating a supply pressure to a lower discharge pressure, where the discharge pressure at least partly corresponds to a mechanical counterpressure from a spring element and where the pressure reduction valve is provided with a spindle, preferably an adjustable spindle.

### Description of Prior Art

It is common knowledge to use pressure reduction valves in connection with the use of gas, which is either stored at a high pressure in a pressurised container or is supplied at a partly reduced, though still higher pressure. Such a reduction valve may e.g. ensure supply of gas at a pressure which does not exceed a safety limit or similar, and/or is adjusted to a given consumer situation at a point of consumption or for a consumer apparatus, and which at the same time is as constant as possible, irrespectively of fluctuations in the supply pressure.

The prior art types of pressure reduction valves are made with a valve function which is activated by a piston, where a spring element, usually a compression spring, is provided at one side of the piston. The spring presses the piston away from the valve function which is opened thereby. The gas is conducted through the inlet of the pressure reduction valve to the open valve function and on to a chamber where the gas pressure is acting on the piston. When the gas pressure has risen sufficiently to overcome the spring force, the piston is pressed against the valve function which then becomes shut. A stable gas pressure will be established in the chamber, as the valve function is opened as soon as the gas pressure drops, and is shut as soon as the gas pressure in the chamber rises. This regulated gass pressure is also called the discharge pressure which from the chamber at the piston is typically conducted to a discharge connection or similar to which a consumer can be coupled. It is thus the size of the spring force in relation to the piston area acted on by the discharge pressure which determines the size of the discharge pressure. By increasing the prestress on the spring, a greater spring force acting against the discharge pressure is attained, and in this way the discharge pressure is regulated to be higher. Also, regulation to a lesser discharge pressure is performed by reducing the spring force. On many pressure regulators, such a regulation of the spring force is performed in that a screw mechanism with a handwheel is connected with a spring element incorporated in the pressure regulating valve. By turning the handwheel one way, the discharge pressure is increased, and by turning it the other way, the discharge pressure is reduced. The force to be applied to the handwheel, is typically rising when wanting to increase the discharge pressure since the spring will exert more resistance the more it is prestressed. Exactly this adjusting mechanism for changing the prestressing on a spring via a handwheel is not particularly suitable since for many manually adjustable pressure reduction valves, quite a lot of finger force is to be applied, which may be a problem for e.g. the elderly or disabled who do not have the necessary strength.

Such a valve is known from i.a. US 2006 260690 A1.

The purpose of the invention is to indicate a pressure reduction valve where only modest muscular strength/hand force is to be applied for operation the handwheel of the valve, both in regulating to a lower discharge pressure and by regulating to a higher discharge pressure.

### Description of the Invention

As mentioned in the introduction, the present invention concerns a pressure reduction valve with a valve housing for use in connection with regulating a supply pressure to a lower discharge pressure, where the discharge pressure at least partly corresponds to a mechanical counterpressure from a spring element and where the pressure reduction valve is provided with a spindle which is typically connected with a handwheel, and further includes a movable member, preferably a piston or a membrane, where the spring element is fitted and acts between the movable part and the valve housing, and where spindle and the movable part are movable in relation to each other.

The discharge pressure is regulated in that the discharge pressure acts against the spring force, and by increasing discharge pressure it will press a seat disposed on the movable part, e.g. on a piston, against a packing provided on the spindle, and where the spindle and thereby the packing can be moved in relation to the piston in order to set the discharge pressure to a certain value.

By such a pressure reduction valve where the prestressing of the regulating spring is not performed directly by the user via the handwheel, there is achieved the advantage that lesser force is required to turn the spindle and thereby regulate the discharge pressure. For people with disabilities or reduced muscle power in the hands, it is thus easier to perform adjusting of such a pressure reduction valve.

A pressure reduction valve according to the invention may, as mentioned, be with a movable member which is either constituted by a piston or a membrane. These two options provides the possibility of adapting the pressure reduction valve optimally to the intended task.

In an embodiment of a pressure reduction valve according to the invention, the movable part, which is connected to a spring element, may be arranged such that the movable part is urged away from the spindle by the spring force in the spring element. By this solution is achieved the advantage that the spring force is not acting on the spindle in any way and thereby does not have any significance to the regulation of the spindle. Thus is not required any more force for regulation than necessary for overcoming the friction in the thread between the housing of the pressure reduction valve and the spindle plus the friction existing at various sealings in the valves. This friction is negligible as compared to prior art pressure reduction valves, where a spring element is regulated directly by compression when the pressures is adjusted upwards. It is thus possible, even with very little force, to perform a precise adjusting of the pressure reduction valve.

Such an adjustment or regulation of a pressure reduction valve according to the invention may advantageously be effected in that the spindle is axially adjustable via a screw thread, where the spindle is provided with a handwheel ensuring that the spindle can be turned easily in the thread.

Another variant may be with a spindle which can be set at selected fixed positions, or alternatively in stepless positions, only by axial displacement of the spindle itself.

In a preferred embodiment of a pressure reduction valve according to the invention, a gas passage with a valve seat is provided in the movable piston, where piston and spindle form a first compartment from which additionally there is at least one gas passage through the piston to a second compartment, where the second compartment communicates with a discharge opening.

When the gas flows into the first compartment across the open valve seat, the gas is conducted further on through the second passage to the second compartment. The discharge pressure in the second compartment will act on the piston from one side, while the spring force acts on the piston from the other side. The discharge pressure is thus always counteracting the spring force. The spring force is oriented such that it will press the valve seat of the piston away from the packing in the spindle and thus keep the valve seat open. The valve seat will only be opened when the discharge pressure has become large enough to overcome the spring force, thus pressing the valve seat of the piston against the packing of the spindle. The valve seat will thus become opened or shut all the time, depending on the size of the spring force compared with the force exerted by the discharge pressure on the piston. The discharge pressure will thereby be regulated to a discharge pressure corresponding to the counterpressure from the spring, and may be adjusted by the consumer without appreciable resistance.

Depending on whether a higher or lower pressure is desired, the spindle is to be turned up or down, respectively. The higher the spindle is screwed up, the more the spring is to be compressed in order to close the valve seat of the piston against the packing of the spindle. This will cause a higher discharge pressure. However, irrespectively whether a higher or a lower discharge pressure is desired, it is not the consumer who is to use force in order to compress the spring via the handwheel and the spindle as by the existing pressure reduction valves. The force for compressing the spring comes only from the discharge pressure.

### Short Description of the Drawing

The invention is described in more detail with reference to the drawing, wherein:
Fig. 1 shows a cross-section of a pressure reduction valve with a piston.
Fig. 2 shows a cross-section of a pressure reduction valve with a membrane.

### Detailed Description of the Invention

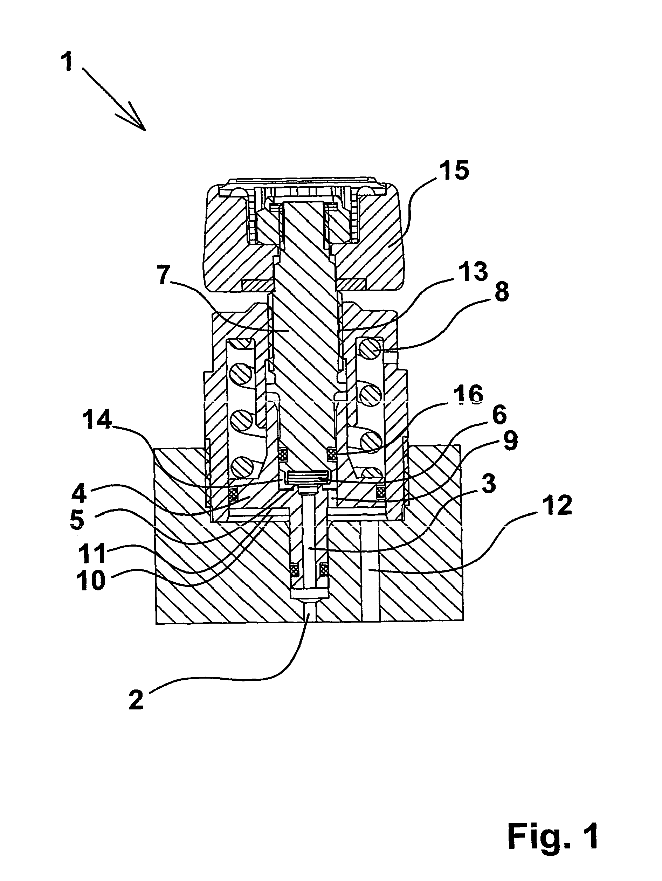

In Fig. 1 is seen a pressure reduction valve 1 with a valve housing with an access opening 2 through which gas flows through a boring 3 in a piston 4. At the end of the boring 3, there is a valve seat 5 which is closed by a packing 6 mounted at the end of the spindle 7. The piston 4 is actuated by a spring force from a compression spring 8 fitted between the piston 4 and the valve housing, whereby the valve seat 5 is urged away from the packing 6, thereby allowing the gas to flow through the boring 3, across the valve seat 5 to a first compartment 14 and via a second boring 9 to a second compartment 10 at the other side of the piston 4. Here, the gas pressure acts on a larger piston area 11, and from this second compartment 10 there is connection to a discharge opening 12.

By adjusting the spindle 7, which can be moved in axial direction via a screw thread 13 by a handwheel 15, it is possible to move the packing 6 up or down, depending on whether the discharge pressure is to to be increased or reduced. By turning the spindle 7 and thereby the packing 6 downwards, a lower discharge pressure is attained, while an upwards directed movement entails a higher discharge pressure, as the spring 8 is thus to be compressed more before the valve seat 5 comes in contact with the packing 6, thereby shutting off the gas flow across the valve seat 5.

Since there is no spring force acting on the spindle 7, it is only the friction between the packing 6 and the valve seat 5 plus the friction in the O-ring sealing 16 and the friction in the thread 13 that produce resistance, and thus no appreciable force is required to regulate the discharge pressure, neither up nor down.

In the shown variant of a pressure reduction valve according to the invention, emphasis is put on describing the invention as simply as possible, and it is obvious that a skilled in the art may provide pressure reduction valves having different appearances but which still are within the scope of protection of the invention. This is not an exhaustive description, and many other embodiments of a pressure reduction valve according to the invention may be produced.

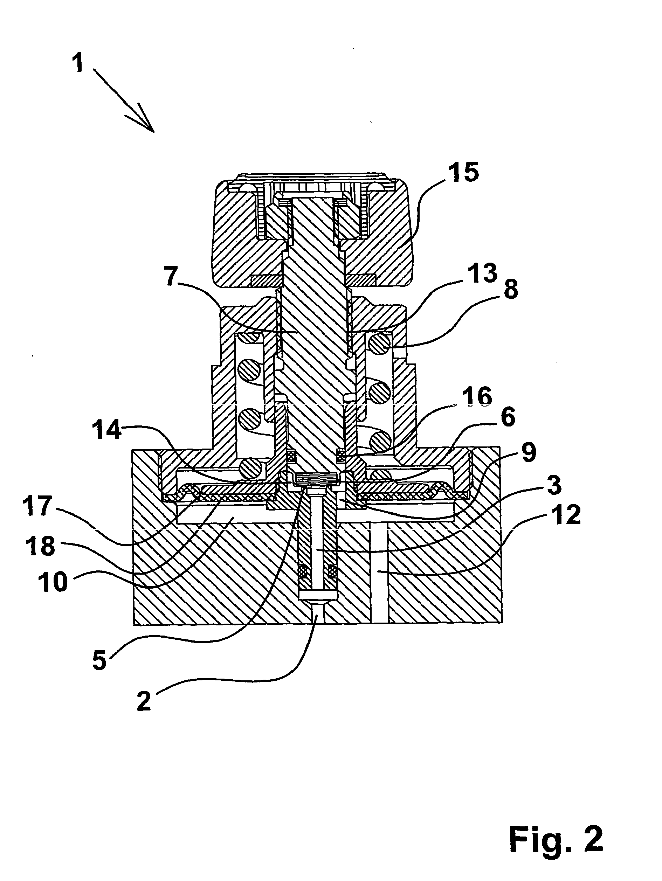

In Fig. 2 appears a pressure reduction valve 1 where there is a membrane 17 with an area 18 constituting the movable part. In principle, there are no other differences between the two variants shown in Fig. 1 and in Fig. 2.

## Claims

1. A pressure reduction valve (1) with a valve housing for use in connection with regulating a supply pressure to a lower discharge pressure, where the discharge pressure at least partly corresponds to a mechanical counterpressure from a spring element (8), and where the pressure reduction valve (1) is provided with a spindle (7), preferably an adjustable spindle (7), **characterised in that** the pressure reduction valve (1) further includes a movable member (4), preferably a piston or a membrane, where the spring element (8) is fitted and acts between the movable part (4) and the valve housing, and where spindle (7) and the movable part (4) are movable in relation to each other, where the movable part (4) includes a gas passage (3) with a valve seat (5), where the movable part (4) and spindle (7) form a first compartment (14) from which there is at least one further gas passage (9) to a second compartment (10), where the second compartment (10) communicates with a discharge opening (12).

2. Pressure reduction valve according to claim 1, **characterised in that** the movable part (4), which is connected to a spring element (8), is arranged such that the movable part (4) is pressed away from the spindle (7) by the spring element (8).

3. Pressure reduction valve according to any of claims 1 and 2, **characterised in that** the spindle (7) is with a packing (6) for bearing against the valve seat (5).

4. Pressure reduction valve according to any of claims 1 to 3, **characterised in that** the spindle (7) is axially adjustable via a screw thread (13).

5. Pressure reduction valve according to any of claims 1 to 4, **characterised in that** the spindle (7) is provided with a handwheel (15).

## Patentansprüche

1. Druckreduzierventil (1) mit einem Ventilgehäuse für die Verwendung im Zusammenhang mit der Regulierung eines Versorgungsdrucks auf einen niedrigeren Ausgabedruck, wobei der Ausgabedruck wenigstens teilweise einem mechanischen Gegendruck von einem Federelement (8) entspricht und wobei das Druckreduzierungsventil (1) mit einer Spindel (7), vorzugsweise einer einstellbaren Spindel (7), versehen ist, **dadurch gekennzeichnet, dass** das Druckreduzierventil (1) ferner ein bewegliches Element (4), vorzugsweise einen Kolben oder eine Membran, umfasst, wobei das Federelement (8) zwischen das bewegliche Teil (4) und das Ventilgehäuse eingesetzt ist und dazwischen wirkt und wobei die Spindel (7) und das bewegliche Teil (4) relativ zueinander beweglich sind, wobei das bewegliche Teil (4) einen Gasdurchlass (3) mit einem Ventilsitz (5) aufweist, wobei das bewegliche Teil (4) und die Spindel (7) ein erstes Fach (14) bilden, von wo aus wenigstens ein weiterer Gasdurchlass (9) zu einem zweiten Fach (10) führt, wobei das zweite Fach (10) mit einer Ausgabeöffnung (12) kommuniziert.

2. Druckreduzierventil nach Anspruch 1, **dadurch gekennzeichnet, dass** das bewegliche Teil (4), das mit einem Federelement (8) verbunden ist, so ausgelegt ist, dass das bewegliche Teil (4) durch das Federelement (8) von der Spindel (7) weggedrückt wird.

3. Druckreduzierventil nach einem der Ansprüche 1 und 2, **dadurch gekennzeichnet, dass** die Spindel (7) mit einer Dichtung (6) versehen ist, um an dem Ventilsitz (5) anzuliegen.

4. Druckreduzierventil nach einem der Ansprüche 1 bis 3, **dadurch gekennzeichnet, dass** die Spindel (7) über einen Schraubenkopf (13) axial einstellbar ist.

5. Druckreduzierventil nach einem der Ansprüche 1 bis 4, **dadurch gekennzeichnet, dass** die Spindel (7) mit einem Handrad (15) versehen ist.

## Revendications

1. Soupape de réduction de pression (1) avec logement de soupape à utiliser en relation avec la régulation d'une pression d'alimentation vers une pression de décharge inférieure, où la pression de décharge correspond au moins partiellement à une contre-pression mécanique provenant d'un élément formant ressort (8), et où la soupape de réduction de pression (1) est pourvue d'une tige (7), de préférence une tige ajustable (7), **caractérisée en ce que** la soupape de réduction de pression (1) inclut en outre un organe mobile (4), de préférence un piston ou une membrane, où l'élément formant ressort (8) est ajusté et agit entre la partie mobile (4) et le logement de soupape, et où la tige (7) et la partie mobile (4) sont mobiles l'une par rapport à l'autre, où la partie mobile (4) inclut un passage de gaz (3) avec un siège de soupape (5), où la partie mobile (4) et la tige (7) forment un premier compartiment (14) à partir duquel se trouve au moins un passage de gaz supplémentaire (9) vers un second compartiment (10), où le second compartiment (10) communique avec une ouverture de décharge (12).

2. Soupape de réduction de pression selon la revendication 1, **caractérisée en ce que** la partie mobile (4), qui est raccordée à un élément formant ressort (8), est agencée de telle sorte que la partie mobile (4) soit pressée en éloignement de la tige (7) par l'élément formant ressort (8).

3. Soupape de réduction de pression selon l'une quelconque des revendications 1 et 2, **caractérisée en ce que** la tige (7) est pourvue d'une garniture (6) pour reposer contre le siège de soupape (5).

4. Soupape de réduction de pression selon l'une quelconque des revendications 1 à 3, **caractérisée en ce que** la tige (7) est axialement ajustable par l'intermédiaire d'un filetage de vis (13).

5. Soupape de réduction de pression selon l'une quelconque des revendications 1 à 4, **caractérisée en ce que** la tige (7) est pourvue d'un volant de manoeuvre (15).
